# EUROPEAN PATENT APPLICATION

(11) **EP 3 418 181 A1**
(43) Date of publication of application: **26.12.2018**
(21) Application number: 17382373.3
(22) Date of filing: 19.06.2017
(51) Int. Cl.: B64C 1/34, B64C 1/12, B64C 3/26, B64C 3/30

(54) **PANEL FOR AN AIRCRAFT STRUCTURE**

(71) Applicant: Airbus Operations, S.L., 28906 Getafe Madrid (ES)
(72) Inventor: VÁZQUEZ CASTRO, Jesús Javier, 28906 Getafe (ES); GARCÍA NIETO, Carlos, 28906 Getafe (ES); GUINALDO FERNÁNDEZ, Enrique, 28906 Getafe (ES); CARRASCO-FERNÁNDEZ, José, 28906 Getafe (ES); CALVO-SÁNCHEZ, Darío, 28906 Getafe (ES); MARTÍN-CUBILLO, Carlos, 28906 Getafe (ES)
(74) Representative: Elzaburu S.L.P.

(57) **Abstract**

- an inflatable panel (1) comprising two flexible face sheets (2, 3) and a core (4) located between the two flexible face sheets (2, 3), and
- lateral joining members (5) configured to be joined to the aircraft structure and coupled to the inflatable panel (1), said lateral joining members (5) covering at least part of the linear contour of the two flexible face sheets (2, 3) and having a first part covering an edge portion adjacent to the contour of one of the face sheets (2) and a second part covering an edge portion adjacent to the contour of the other face sheet (3).

## Description

The invention is related with a new structure that could replace typical sandwich panels, making use of a flexible layer to produce an inflatable structure.

### Background of the invention

The current solution to produce a structure that has big out-of-the-plane inertia, are honeycomb panels or panels stiffened with stringers. Bonded honeycomb sandwich construction has been a basic structural concept in the aerospace industry.

A honeycomb panel consists of two face sheets separated by a honeycomb core. The facings of the sandwich act similarly to the flanges of an I-beam, taking the bending loads, one facing in tension and the other in compression. Following the comparison, the honeycomb acts as the web of the I-beam, resisting the shear load and also separating the facings apart and increasing the stiffness. Finally, the core is adhesively joined to all the sandwich components, allowing them to act as one unit with high torsional rigidity.

Weight saving is one of the main drivers when using sandwich structures. However, there are several requirements that must be fulfilled by such structures:
- The design of the sandwich structures should be optimized toward a minimum installation of elements or riveting of the structure in the areas with core. For this purpose, monolithic areas, potting compound or inserts can be used to create local structures for riveting and bolt installation.
- The sandwich structures exposed to the airflow must conform to aerodynamic and structural tolerance requirements to minimize airflow perturbation and erosion.
- Designer must consider the interface constraints, like room available for the component.
- Water tightness inspection and non- destructive inspections and testing NDT/NDI of the structures has to be taken into account according to the classification of the structure.

On the other hand, these structures are difficult to produce by automated means due to the nature of the materials and the adjustments required in order to produce the sandwich. Thus, they are often produced manually and therefore with high associated costs.

### Summary of the invention

The invention proposes a different way of having a structure able to carry out-of-the-plane loads, typically pressure, by using an inflatable panel made of flexible layer faces.

The objectives for this concept, compared with the state of the art are mainly:
- Weight saving.
- Cost saving.
- Water tight design.
- Maintenance (easy to repair, replace, maintain).

The panel object of the invention comprises:
- an inflatable panel comprising two flexible face sheets and a core located between the two flexible face sheets, and
- lateral joining members configured to be joined to the aircraft structure and coupled to the inflatable panel, said lateral joining members covering at least part of the linear contour of the two flexible face sheets and having a first part covering an edge portion adjacent to the contour of one of the face sheets and a second part covering an edge portion adjacent to the contour of the other face sheet.

Therefore, the faces of the inflatable panel are flexible layer faces and hence they can adapt to the interior pressure of the inflatable panel. The lateral joining members can cover part or the totality of the contour line of the flexible layer faces, i.e., the lateral joining members may surround totally or partially the inflatable panel. The lateral joining members comprises two parts:
- a first part covering a portion of the external edge or outermost edge of one of the faces, i.e., said first part extending inwardly a portion from the contour of one of the faces, and
- a second part covering a portion of the external edge or outermost edge of the other face, i.e., said second part also extending inwardly a portion from the contour of the other face.

Therefore, the edges of the inflatable panel are covered by the lateral joining members in both face sheets.

This invention can be used as an alternative to any sandwich panel, or even any panel stiffened with stringers, used in aircrafts, such the ones used in belly fairing, trailing edge panels, access doors or other locations.

The above inflatable concept is valid for concave and convex surfaces under suction/pressure. The shape of the inflatable structure can be tailored to provide the concave/convex surface using, for instance, drop stitching technique in the core extending the drop stitch between both faces.

The way an inflatable panel works is the following:
- By inflating the part up to a certain pressure (from 1 bar up to 5 bars), panel becomes stiff enough and is able to keep the shape to fulfil the requirements. The more pressure, the more stiffness, and smaller out of plane deformation. Also, the bigger the inflatable panel height, the bigger the panel stiffness.
- It is not needed any dedicated system to control inner pressure. Panel material is airtight so pressure will be kept..
- Typical pressure values needed for inflation (1-3 bars), includes also the inner pressure variation due to in service temperature variation (-54°C to 70°C). That is, there is an inflation overpressure to compensate inner pressure decrease when being at high altitude due to low temperature.
- Inflatable panel is intended to withstand out of the plane load, pressure /suction, and, depending on the attachment to the backup structure, will not carry any in-plane load. This is an advantage in some cases where typical sandwich panels take loads just by deformation compatibility with its supporting structure.
- In case of damage, inner pressure will be lost, and therefore the stiffness. In that case, the claimed panel fulfils the same requirements as the sandwich panel it replaces due to the configuration of the lateral joining members.

### Description of the figures

To complete the description and in order to provide for a better understanding of the invention, a set of drawings is provided. Said drawings form an integral part of the description and illustrate preferred embodiments of the invention. The drawings comprise the following figures.
Figure 1 shows a cross section of a first embodiment of the inflatable panel.
Figure 2 shows a cross section of a first embodiment of the inflatable panel and the lateral joining members.
Figure 3 shows a plan section of a second embodiment of the inflatable panel and the lateral joining members covering part of the linear contour of the flexible face sheet.
Figure 4 shows a cross section of figure 3 showing the inflatable panel and an embodiment of the lateral joining members.
Figure 5 shows a cross section of figure 3 showing the inflatable panel and an third embodiment of the lateral joining members.
Figure 6 shows a plan section of a fourth embodiment of the inflatable panel and the lateral joining members.
Figure 7 shows a plan section of a fifth embodiment of the inflatable panel and the lateral joining members.

### Detailed description of the invention

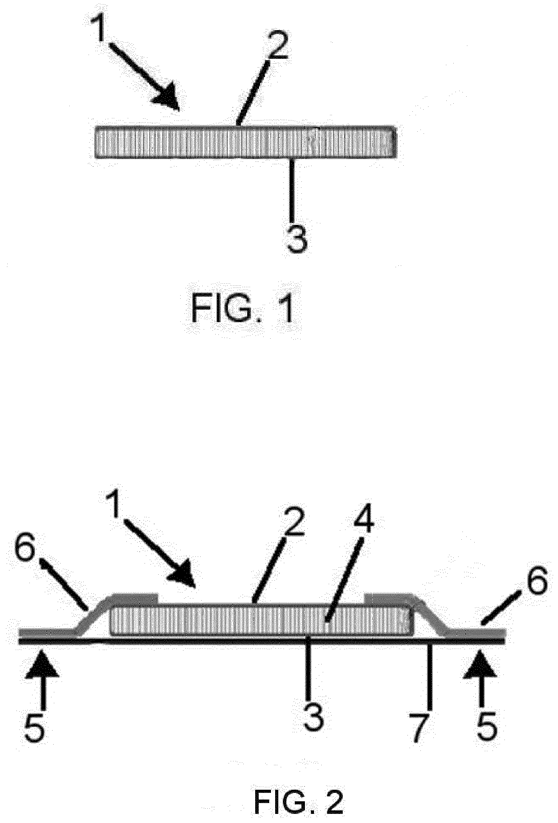

Figures 2 to 7 show several options of the panel object of the invention. Depending on the pressure to be withstood, the load magnitude and direction, and the deformation limit requirement, one or other solutions could be used.

The core (4) of the inflatable panel (1) can be manufactured with or without drop stitching, depending on the requirements, i.e., the two face sheets (2, 3), named as inner and outer faces (2, 3) are joined or stitched by cords so the final external geometry is the required one. The inflatable panel (1) is made up of flexible sheets in the inner and outer faces (2, 3) and the drop stitching is the feature that gives and keeps the required external shape to the panel (1).

Figure 2 shows a first embodiment in which an inflatable panel (1) with drop stitch is supported by a contour frame (6) and by a skin (7). The contour frame (6) is in contact with the inner face (2) of the inflatable panel (1) and the skin (7) is in contact with the outer face (3) of the inflatable panel (1), therefore the inflatable panel (1) is enclosed between the skin (7) and the contour frame (6). The skin (7) covers not only the edge portion adjacent to the contour of the face sheet (2) but the entire portion of the face sheet (2).

The contour frame (6), made of composite material or metal, is the part that connects the inflatable panel (1) and the supporting elements of the main structure of the aircraft.

The skin (7) is also attached to the contour frame (6), bonded or by any other mean, and can be bonded or not to the inflatable panel (1), depending on the requirements.

Figure 2 shows a cross section of a panel (1), including a Z-profile for the contour frame (6) in which one leg of the Z-profile is coupled to the inflatable panel (1) and the other leg is configured to be joined to the aircraft structure. Additionally, figure 2 shows a flexible skin (7), although a hard skin (7) could also be used. The hard skin (7) could be made using metallic or composite materials.

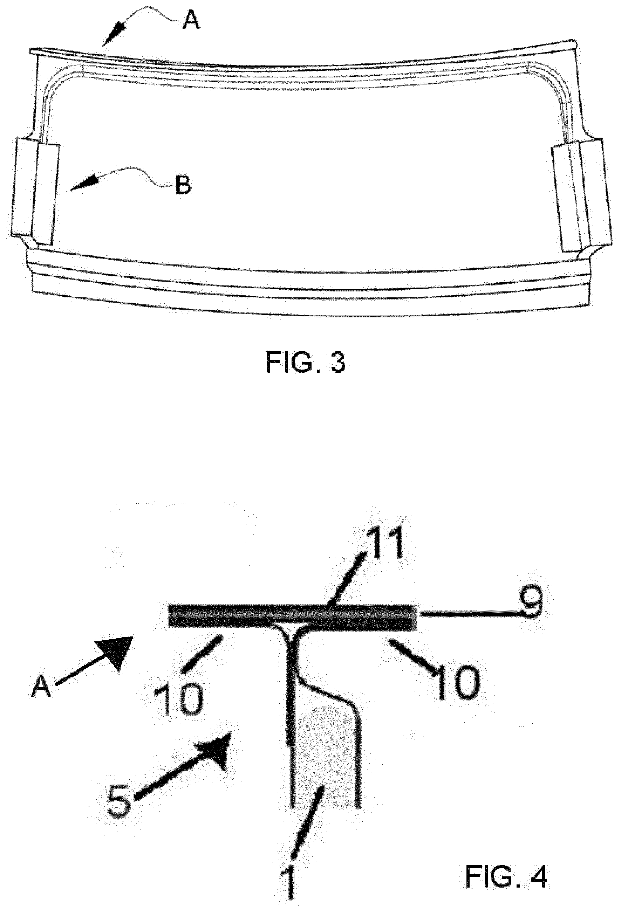

As an alternative to the embodiment shown in figure 2, some edges of the inflatable panel (1) could be supported, instead that by means of a Z-profile, by other joining means and therefore a combination of several lateral joining members (5) can be made in one panel (1) as depicted in figure 3.

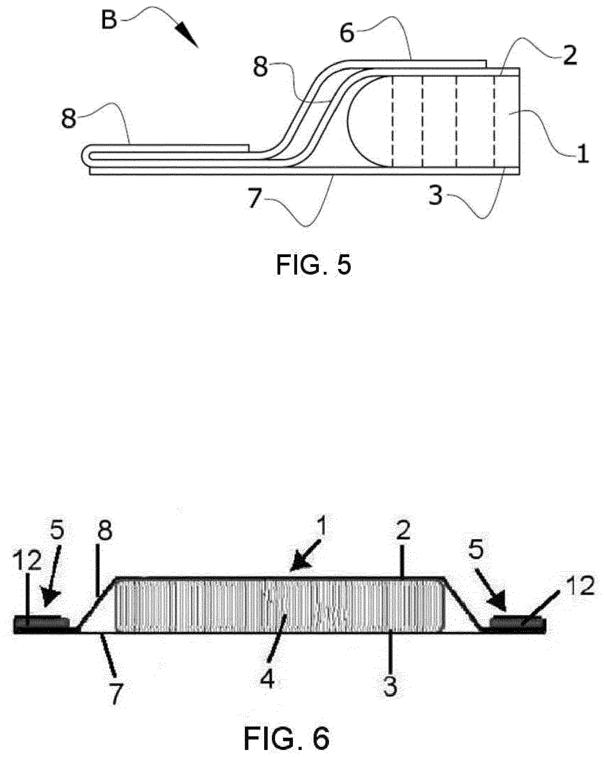

Figure 5 shows an embodiment that additionally comprises an inner flexible skin (8) covering the inner face (2) of the inflatable panel (1), the contour frame (6) being located above the inner flexible skin (8). Moreover, the free edge of the inner flexible skin (8) is located rolled and bonded over the free end of the contour frame (6). Said joining improves the bonding line and provides a suitable surface for attaching the panel (1) to the aircraft structure.

Figure 4 shows an embodiment of the contour frame (6) that comprises a first element (9) configured to the be joined to the aircraft structure, a second element (10) bonded to the edge portion adjacent to the contour of both face sheets (2) of the inflatable panel (1) and a hook and loop touch fastener (11) commercially known as Velcro, located between the first (9) and the second (10) element for joining the first element (9) and the second element (10) having the advantage that the removal of the inflatable panel (1) can be done easily.

The embodiments shown in Figures 2 to 5 in which a flexible skin (7) is used have the advantage that in case of inflatable panel (1) puncture or rupture, inner pressure will be lost and will not keep the required shape, but the inflatable panel (1) will not be lost because it is attached to the aircraft structure by the contour frame (6).

Figure 6 shows another embodiment of the invention in which the lateral joining members (5) comprises two flexible skins (7, 8) covering each face (2, 3) of the inflatable panel (1) and two straps (12) joined to the free edges of the two flexible skins (7, 8). Both flexible skins (7, 8) are bonded to the inflatable panel (1). The group is then attached to the surrounding aircraft structure by bolts located in the straps (12).

In case of inflatable panel (1) puncture or rupture, inner pressure will be lost, and the inflatable panel (1) will not keep the required shape, but it will not be lost, because it is attached to the main supporting structure of the aircraft by the two straps (12).

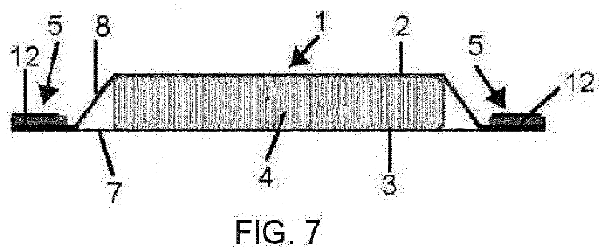

Figure 7 shows an additional embodiment showing that the lateral joining members (5) comprises a contour frame (6) having a U-shaped enclosing the edges of the inner and outer faces (2, 3) of the inflatable panel (1). Specifically, the contour frame (6) has a first leg covering at least part of the contour of one of the faces (2, 3) of the inflatable panel (1) and a second leg covering at least part of the contour of the other face (2, 3). Said structure is then attached to the surrounding aircraft structure by bolts.

## Claims

1. Panel of an aircraft structure, **characterised in that** it comprises:
- an inflatable panel (1) comprising two flexible face sheets (2, 3) and a core (4) located between the two flexible face sheets (2, 3), and
- lateral joining members (5) configured to be joined to the aircraft structure and coupled to the inflatable panel (1), said lateral joining members (5) covering at least part of the linear contour of the two flexible face sheets (2, 3) and having a first part covering an edge portion of one of the face sheets (2) adjacent to its contour and a second part covering an edge portion of the other face sheet (3) adjacent to its contour.

2. Panel, according to claim 1, wherein:
- the first part of the lateral joining members (5) comprises a contour frame (6) in contact with one of the faces sheets (2) of the inflatable panel (1) covering an edge portion of the face sheet (2) adjacent to its contour, and
- the second part of the lateral joining members (5) comprises a skin (7) in contact with the other face sheet (3) of the inflatable panel (1) and covering at least an edge portion of the face sheet (3) adjacent to its contour, the skin being attached to the contour frame (6), such that the inflatable panel (1) is enclosed between the skin (7) and the contour frame (6).

3. Panel, according to claim 2, wherein the contour frame (6) comprises a Z-profile, one leg of the Z-profile coupled to the edge portion of the face sheet (2) of the inflatable panel (1) and the other leg configured to be joined to the aircraft structure.

4. Panel, according to claims 2 or 3, wherein it additionally comprises a flexible skin (8) covering the face sheet (2) of the inflatable panel (1) coupled to the contour frame (6), the flexible skin (8) being located between the face sheet (2) and the contour frame (6).

5. Panel, according to claim 4, wherein the free edge of the flexible skin (8) is located rolled and bonded over the free end of the contour frame (6) configured to be joined to the aircraft structure.

6. Panel, according to claim 2, wherein the contour frame (6) comprises a first element (9) configured to the be joined to the aircraft structure, a second element (10) bonded to the edge portion of both face sheets (2) of the inflatable panel (1) and a hook and loop touch fastener (11) located between the first (9) and the second (10) element for joining the first element (9) and the second element (10).

7. Panel, according to claim 6, wherein the first element (9) is located perpendicular to the inflatable panel (1).

8. Panel, according to any preceding claim 2 to 7, wherein the skin (7) is a flexible skin or a hard skin.

9. Panel, according to claim 1, wherein the first part and the second part of the lateral joining members (5) comprise a flexible skins (7, 8) covering each face sheet (2, 3) of the inflatable panel (1) and two straps (12) joined to the free edges of the two flexible skins (7, 8) configured to be attached to the aircraft structure.

10. Panel, according to claim 1, wherein the lateral joining members (5) comprises an U-shaped contour frame (6) having a first leg covering an edge portion of one of the face sheets (2) of the inflatable panel (1) adjacent to its contour and a second leg covering an edge portion of the other face sheet (2) of the inflatable panel (1) adjacent to its contour.

11. Panel, according to any preceding claim, wherein the inflatable panel (1) comprises a core (4) having drop stich extending between both face sheets (2, 3).
